(19) **Europäisches Patentamt**
**European Patent Office**
**Office européen des brevets**

(11) **EP 1 829 052 B1**

(12) **EUROPEAN PATENT SPECIFICATION**

(45) Date of publication and mention
of the grant of the patent:
**16.04.2008 Bulletin 2008/16**

(21) Application number: **05825377.4**

(22) Date of filing: **15.12.2005**

(51) Int Cl.:
***G21K 1/06*** *(2006.01)*

(86) International application number:
**PCT/NL2005/000860**

(87) International publication number:
**WO 2006/068464 (29.06.2006 Gazette 2006/26)**

(54) **MULTI-LAYER MIRROR FOR RADIATION IN THE SOFT X-RAY AND XUV WAVELENGTH RANGE**

MEHRSCHICHTIGER SPIEGEL FÜR STRAHLUNG IM WEICHRÖNTGEN- UND XUV-WELLENLÄNGENBEREICH

MIROIR MULTICOUCHE POUR RADIATION DANS LA PLAGE DES LONGUEURS D'ONDE DES RAYONS X SOUPLES ET DES XUV

(84) Designated Contracting States:
**AT BE BG CH CY CZ DE DK EE ES FI FR GB GR HU IE IS IT LI LT LU LV MC NL PL PT RO SE SI SK TR**

(30) Priority: **21.12.2004 NL 1027836**

(43) Date of publication of application:
**05.09.2007 Bulletin 2007/36**

(73) Proprietor: **Stichting voor Fundamenteel Onderzoek der Materie**
**3502 GA Utrecht (NL)**

(72) Inventors:
• **KESSELS, Marcus, Jozef, Henricus**
**NL-6114 NJ Susteren (NL)**
• **VERHOEVEN, Jan**
**NL-3628 BN Kockengen (NL)**

(74) Representative: **Dokter, Hendrik Daniel**
**Octrooibureau Dokter,**
**P.O. Box 657**
**7300 AR Apeldoorn (NL)**

(56) References cited:
EP-A- 0 567 022        US-A1- 2004 121 134
US-A1- 2004 233 519        US-B1- 6 396 900

EP 1 829 052 B1

**Description**

The invention relates to a multi-layer mirror for radiation with a wavelength in the wavelength range between 0.1 nm and 30 nm, comprising a stack of thin films substantially comprising scattering particles which scatter the radiation, which thin films are separated by separating layers with a thickness in the order of magnitude of the wavelength of the radiation, which separating layers comprise substantially non-scattering particles which do not scatter the radiation, or at least do so to lesser extent than the scattering particles. The wavelength range between 0.1 nm and 30 nm comprises the soft X-ray range (wavelength between 0.1 nm and 10 nm) and a part of the so-called XUV range (wavelength between 10 nm and 100 nm).

Multi-layer mirrors for radiation with a wavelength in the wavelength range between 0.1 nm and 30 nm are applied as optical elements in set-ups in laboratories and production facilities, for instance for lithography in the wavelength range between about 10 nm and 15 nm (the so-called extreme UV range (EUV)), for X-ray fluorescence analysis of elements having a low atomic number Z, or for the purpose of X-ray microscopy on biological preparations.

Known from the Netherlands patent no. 1018139 is a multi-layer mirror wherein the scattering particles are selected from the groups of transition elements from the fourth and the sixth period of the periodic system of elements, in particular from the transition elements cobalt (Co), nickel (Ni), tungsten (W), rhenium (Re) and iridium (Ir), wherein the non-scattering particles are substantially passivated particles of lithium (Li).

Also known are multi-layer mirrors with thin films of tungsten (W) separated by separating layers of Si, and with thin film of molybdenum separated by separating layers of Si:H (see for example EP-A1-567022).

It is an object of the invention to provide a multi-layer mirror having a substantially higher reflectivity for radiation in the XUV range than the known multi-layer mirrors.

This object is achieved with a multi-layer mirror of the type specified in claim 1.

It has been found that in the production of a multi-layer mirror according to the prior art islands of the material of the thin films can form during the deposition of a thin film on a separating layer. Such islands impart a nonuniform structure to the surface of the separating layer which results in a decline in the reflectivity of this surface.

By covering the separating layer in each case with an intermediate layer of a material which can be mixed with the material of the thin films and the material of the separating layers in a multi-layer mirror according to the invention, the reflectivity of thin films is increased to a significant extent because the forming of islands of the material of thin films is prevented with the intermediate layers.

The scattering particles in a multi-layer mirror according to the invention are for instance selected from the groups of transition elements from the fourth, fifth and sixth period of the periodic system of elements, more particularly from the transition elements cobalt (Co), nickel (Ni), molybdenum (Mo), tungsten (W), rhenium (Re) and iridium (Ir).

In another embodiment the scattering particles are particles of nickel, and the non-scattering particles are particles of carbon.

In a preferred embodiment the scattering particles are particles of tungsten, and the non-scattering particles are particles of passivated silicon.

In a multi-layer mirror according to the invention the stack comprises for instance at least 10 layers of thin film separated by separating layers.

The stack preferably comprises about 100 layers of thin film separated by separating layers, more preferably the stack comprises about 500 layers of thin film separated by separating layers.

The preference for the highest possible number of layers of thin film separated by separating layers is motivated by the fact that the reflectivity of a multi-layer mirror according to the invention increases as the number of layers of thin film increases.

The invention will be elucidated in the following on the basis of exemplary embodiments, with reference to the drawings.

In the drawings

Fig. 1 shows in cross-section a schematic view of an embodiment of a multi-layer mirror according to the invention, and
Fig. 2 shows the reflectivity of two prior art multi-layer mirrors and of a multi-layer mirror according to the invention as a function of the number of layers.

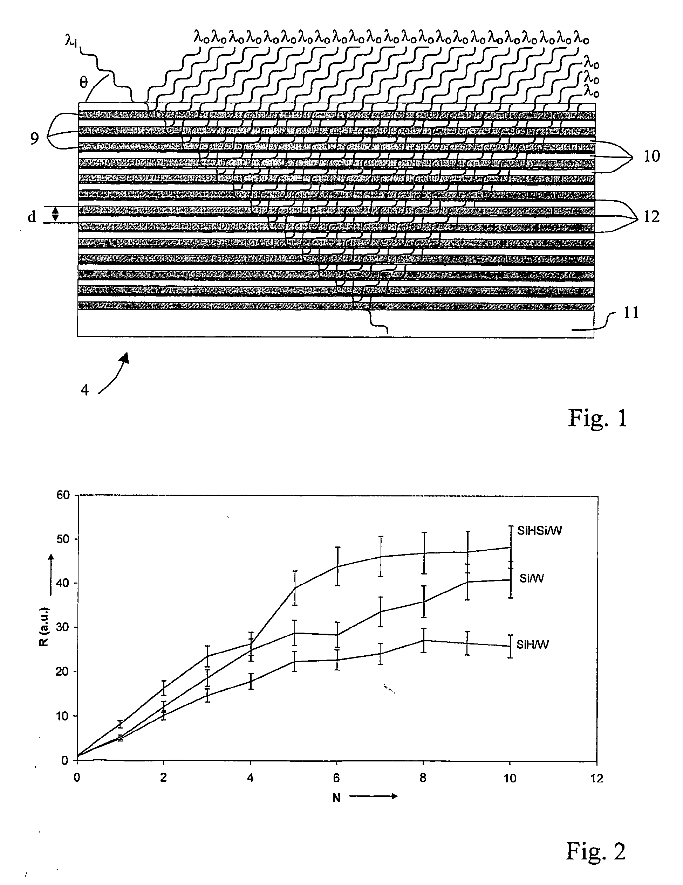

Fig. 1 shows a schematic view in cross-section of a multi-layer mirror 4 which is built up from a large number (250-500) of layers of alternating thin films 9 of tungsten, intermediate layers 12 of silicon and separating layers 10 of silicon passivated with hydrogen, stacked on top of each other on a substrate 11 of a suitable material, for instance silicon wafers or glass. In order to prevent oxidation the upper tungsten thin-film layer 9 is also covered by a layer of silicon 12. Thin films 9 have the same thickness, as do separating layers 10, wherein the sum of the thicknesses of a thin film 9, an intermediate layer 12 and a separating layer 10 defines lattice distance d. In a multi-layer mirror according to the invention the lattice distance d has a value between 0.5 nm and 15 nm. An incoming radiation beam is represented symbolically by a wavy arrow λi, the outgoing radiation beams reflected onto the thin films are represented symbolically by wavy arrows λo. The angle of reflection θ for a determined wavelength λ is determined by the Bragg condition as follows:

$$n\lambda = 2d\ \sin\theta\ (1-\sin 2\theta_c/\sin 2\theta)^{\frac{1}{2}}$$

wherein n is a whole number (n = 1, 2, 3, ..) and $\theta_c$ is the critical angle. By adjusting the multi-layer mirror 4 to a determined angle θ relative to the incident radiation beam λ, this mirror 4 thus acts as monochromator. It has been found that the bandwidth of an X-ray mirror 4 according to the invention acting as monochromator, expressed as a fraction of the wavelength, is smaller than about 1% ($\Delta\lambda/\lambda \leq 0.01$, and depending on the total number of layers). For the sake of clarity only a few of the total number of thin films 9, intermediate layers 12 and separating layers 10 are shown.

Fig. 2 shows the reflectivity R measured during production (expressed in arbitrary units a.u.) of a multi-layer mirror composed of 10 layers of tungsten and silicon (Si/W, middle curve), of a multi-layer mirror composed of 10 layers of tungsten and silicon passivated with hydrogen (SiH/W, lower curve), and of a multi-layer mirror according to the invention composed of 10 thin-film layers of tungsten, intermediate layers of silicon and separating layers of silicon passivated with hydrogen (SiHSi/W, upper curve) as a function of the number of layers N. The multi-layer mirrors are manufactured in accordance with a per se known method by means of electron beam evaporation of tungsten and silicon in an ultra-high vacuum system at a basic pressure of $10^{-9}$ mbar, wherein the silicon and tungsten were vapour-deposited on silicon (100) substrates. The process was monitored instantaneously by means of in situ reflectometry of carbon-K radiation. The energy-rich ions were produced by a Kaufman ion source. A total dosage of about $10^{16}$ H$^+$ ions per cm$^2$ were implanted for the purpose of passivating the silicon layers. The thickness of the tungsten thin films and the silicon or passivated silicon separating layers amounted to about 2 nm, while the thickness of the silicon intermediate layer deposited on the separating layers in the multi-layer mirror according to the invention amounted to about 0.3 nm.

Because the density of passivated silicon is lower than the density of pure silicon, the optical contrast in a multi-layer mirror with passivated silicon is higher than in a multi-layer mirror with pure silicon, and the reflectivity of the former multi-layer mirror should be higher than the reflectivity of the latter mirror. The figure indicates however that a multi-layer mirror composed of layers of tungsten and passivated silicon has a lower reflectivity than a multi-layer mirror composed of tungsten and pure silicon. This worsening in the reflectivity, which amounts to about 25%, can be attributed to the forming of islands of tungsten on the layers of passivated silicon. It has been found that in a multi-layer mirror in which according to the invention the separating layer (in this example passivated silicon) is covered with an intermediate layer of a material (silicon) which can be mixed with the material of the thin films (in this example tungsten) and the separating layers, the reflectivity increases notably (upper curve). The improvement in the effective reflectivity amounts in this example to about 20% compared to the reflectivity of the multi-layer mirror with tungsten and pure silicon.

## Claims

1.  Multi-layer mirror (4) for radiation with a wavelength in the wavelength range between 0.1 nm and 30 nm, comprising a stack of thin films (9) substantially comprising scattering particles which scatter the radiation, which thin films (9) are separated by separating layers (10) with a thickness in the order of magnitude of the wavelength of the radiation, which separating layers (10) substantially comprise non-scattering particles which do not scatter the radiation, or at least do so to lesser extent than the scattering particles, the separating layers (10) being covered on at least one side in each case by an intermediate layer (12) of a material which can be mixed with the material of the thin films (9) and the material of the separating layers (10), the non-scattering particles being selected from the group comprising carbon (C) and passivated silicon (Si:H), **characterized in that** the material of the intermediate layer (12) is silicon (Si).

2.  Multi-layer mirror (4) as claimed in claim 1, **characterized in that** scattering particles are selected from the groups of transition elements from the fourth, fifth and sixth period of the periodic system of elements.

3.  Multi-layer mirror (4) as claimed in claim 2, **characterized in that** the scattering particles are selected from the transition elements cobalt (Co), nickel (Ni), molybdenum (Mo), tungsten (W), rhenium (Re) and iridium (Ir).

4.  Multi-layer mirror (4) as claimed in claim 3, **characterized in that** the scattering particles are particles of tungsten and the non-scattering particles are particles of passivated silicon (Si:H).

5.  Multi-layer mirror (4) as claimed in claim 3, **characterized in that** the scattering particles are particles of nickel, and the non-scattering particles are particles of carbon.

**6.** Multi-layer mirror (4) as claimed in any of the claims 1-5, **characterized in that** the intermediate layer (12) has a thickness of about 0.3 nm.

**7.** Multi-layer mirror (4) as claimed in any of the claims 1-6, **characterized in that** the stack comprises at least 10 layers of thin film (9) separated by separating layers (10).

**8.** Multi-layer mirror (4) as claimed in claim 7, **characterized in that** the stack comprises at least 100 layers of thin film (9) separated by separating layers (10).

**9.** Multi-layer mirror (4) as claimed in claim 8, **characterized in that** the stack comprises about 500 layers of thin film (9) separated by separating layers (10).

**Patentansprüche**

**1.** Mehrschichtspiegel (4) für Strahlung mit einer Wellenlänge im Wellenlängenbereich zwischen 0,1 nm und 30 nm, umfassend eine Stapelung von dünnen Filmen (9) die im Wesentlichen streuende Teilchen enthalten, die die Strahlung streuen, welche dünnen Filme (9) durch Trennschichten (10) mit einer Stärke in der Größenordnung der Wellenlänge der Strahlung getrennt sind, welche Trennschichten (10) im Wesentlichen nicht-streuende Teilchen enthalten, die die Strahlung nicht beziehungsweise in geringerem Ausmaß als die streuenden Teilchen streuen, wobei die Trennschichten (10) jeweils an wenigstens einer Seite von einer Zwischenschicht (12) aus einem mit dem Material der dünnen Filme (9) und dem Material der Trennschichten (10) mischfähigen Material bedeckt sind, wobei die nicht-streuenden Teilchen ausgewählt sind aus der Gruppe, die Kohlenstoff (C) und passiviertes Silizium (Si: H) umfasst, **dadurch gekennzeichnet, dass** das Material der Zwischenschicht (12) Silizium (Si) ist.

**2.** Mehrschichtspiegel (4) nach Anspruch 1, **dadurch gekennzeichnet, dass** streuende Teilchen ausgewählt sind aus den Gruppen der Übergangselemente aus der vierten, fünften und sechsten Periode des Periodensystems.

**3.** Mehrschichtspiegel (4) nach Anspruch 2, **dadurch gekennzeichnet, dass** die streuenden Teilchen ausgewählt sind aus den Übergangselementen Kobalt (Co), Nickel (Ni), Molybdän (Mo), Wolfram (W), Rhenium (Re) und Iridium (Ir).

**4.** Mehrschichtspiegel (4) nach Anspruch 3, **dadurch gekennzeichnet, dass** die streuende Teilchen Wolframteilchen und die nicht-streuenden Teilchen passivierte Siliziumteilchen (Si:H) sind.

**5.** Mehrschichtspiegel (4) nach Anspruch 3, **dadurch gekennzeichnet, dass** die streuenden Teilchen Nickelteilchen und die nicht-streuenden Teilchen Kohlenstoffteilchen sind.

**6.** Mehrschichtspiegel (4) nach einem der Ansprüche 1-5, **dadurch gekennzeichnet, dass** die Zwischenschicht (12) eine Stärke von etwa 0,3 nm hat.

**7.** Mehrschichtspiegel (4) nach einem der Ansprüche 1-6, **dadurch gekennzeichnet, dass** die Stapelung wenigstens 10 durch Trennschichten (10) getrennte Dünnfilmschichten (9) umfasst.

**8.** Mehrschichtspiegel (4) nach Anspruch 7, **dadurch gekennzeichnet, dass** die Stapelung wenigstens 100 durch Trennschichten (10) getrennte Dünnfilmschichten (9) umfasst.

**9.** Mehrschichtspiegel (4) nach Anspruch 8, **dadurch gekennzeichnet, dass** die Stapelung etwa 500 durch Trennschichten (10) getrennte Dünnfilmschichten (9) umfasst.

**Revendications**

**1.** Miroir multicouche (4) pour un rayonnement avec une longueur d'onde comprise dans la gamme des longueurs d'onde s'étendant entre 0,1 nm et 30 nm, comprenant un empilement de films minces (9) contenant essentiellement des particules de dispersion qui diffusent le rayonnement, lesdits films minces (9) étant séparés par des couches de séparation (10) dont l'épaisseur est de l'ordre de grandeur de la longueur d'onde du rayonnement, lesdites couches de séparation (10) contenant essentiellement des particules de non dispersion qui ne diffusent pas le rayonnement, ou qui au moins diffusent le rayonnement dans une mesure moindre que les particules de dispersion, les couches de séparation (10) étant recouvertes sur au moins un côté dans chaque cas par une couche intermédiaire (12) constituée d'une matière qui peut être mélangée avec la matière dont les films minces (9) sont constitués et avec la matière dont les couches de séparations (10) sont constituées, les particules de non dispersion étant sélectionnées dans le groupe comprenant le carbone (C) et le silicium passivé (Si:H), **caractérisé en ce que** la matière dont la couche intermédiaire (12) est constituée est le silicium (Si).

2. Miroir multicouche (4) selon la revendication 1, **caractérisé en ce que** les particules de dispersion sont sélectionnées dans les groupes des éléments de transition dans les quatrième, cinquième et sixième périodes du système périodique des éléments.

3. Miroir multicouche (4) selon la revendication 2, **caractérisé en ce que** les particules de dispersion sont sélectionnées parmi les élément de transition suivants: le cobalt (Co), le nickel (Ni), le molybdène (Mo), le tungstène (W), le rhénium (Re) et l'iridium (Ir).

4. Miroir multicouche (4) selon la revendication 3, **caractérisé en ce que** les particules de dispersion sont des particules de tungstène, et les particules de non dispersion sont des particules de silicium passivé (Si:H).

5. Miroir multicouche (4) selon la revendication 3, **caractérisé en ce que** les particules de dispersion sont des particules de nickel, et les particules de non dispersion sont des particules de carbone.

6. Miroir multicouche (4) selon l'une quelconque des revendications 1 à 5, **caractérisé en ce que** la couche intermédiaire (12) présente une épaisseur d'environ 0,3 nm.

7. Miroir multicouche (4) selon l'une quelconque des revendications 1 à 6, **caractérisé en ce que** l'empilement comprend au moins 10 couches de film mince (9) séparées par des couches de séparation (10).

8. Miroir multicouche (4) selon la revendication 7, **caractérisé en ce que** l'empilement comprend au moins 100 couches de film mince (9) séparées par des couches de séparation (10).

9. Miroir multicouche (4) selon la revendication 8, **caractérisé en ce que** l'empilement comprend au moins environ 500 couches de film mince (9) séparées par des couches de séparation (10).

Fig. 1

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- NL 1018139

- EP 567022 A1